# DEMANDE DE BREVET EUROPEEN

(11) **EP 2 520 987 A1**
(43) Date de publication de la demande: **07.11.2012**
(21) Numéro de dépôt: 11164490.2
(22) Date de dépôt: 02.05.2011
(51) Int. Cl.: G04D 1/02, B23Q 3/18, B25B 5/14

(54) **Système de serrage de pièces par vissage à l'aide de broches**

(71) Demandeur: Affolter Holding S.A., 2735 Malleray (CH)
(72) Inventeur: Affolter, Marc-Alain, 2735, Malleray (CH); Domine, Emmanuel, 2034, Peseux (CH)
(74) Mandataire: GLN

(57) **Abrégé**

Système de serrage de pièces par vissage à l'aide de broches Système de serrage pour l'immobilisation d'une pièce (1) creuse à des fins d'usinage et/ou de taillage, comprenant un premier tasseau (3) pourvu d'un élément support (4) s'étendant selon un axe longitudinal (L) et sur lequel est engagée ladite pièce (1), un second tasseau (5) dont au moins un organe de contact est déplaçable par rapport au premier tasseau (3) de manière à maintenir ladite pièce (1), au moins un moyen d'actionnement pour générer un mouvement de déplacement axial dudit organe de contact, caractérisé en ce que le moyen d'actionnement comprend d'une part des moyens pour générer un mouvement de rotation relatif entre le premier tasseau (3) et le second tasseau (5) et d'autre part des moyens de transformation cinématique pour transformer le mouvement de rotation relatif, en mouvement de translation axiale de l'organe de contact.

## Description

### Domaine technique

La présente invention se rapporte au domaine technique général du taillage et du fraisage de pièces, notamment de pièces d'horlogerie et, plus particulièrement de pièces de petites tailles. Ces pièces sont par exemple des rondelles dans lesquelles seront taillées des dentures externes.

Plus généralement, l'invention concerne un système de serrage de pièces qui, pour leur usinage, ne peuvent être tenues par l'extérieur et doivent donc être tenues par l'intérieur, au niveau d'un trou qu'elles comportent.

De tels systèmes de serrage sont par exemple utilisés sur des machines d'usinage, de taillage et dans divers centres d'usinage et/ou de taillage à commande numérique.

### Etat de la technique

On connaît des systèmes de serrage utilisés dans des centres de taillage par exemple des centres de taillage de type CNC. Ces systèmes comprennent un tasseau et un contre tasseau montés sur des broches, en général synchronisées, permettant des déplacements coordonnés de la pièce à usiner.

Le serrage des pièces du genre rondelle ou cylindre, disposées entre le tasseau et le contre tasseau, se fait par un déplacement relatif en translation du tasseau et du contre tasseau. Les pièces sont enserrées par leurs extrémités, par exemple par leurs faces opposées. Les forces appliquées sur les pièces sont générées par le déplacement relatif en translation du tasseau et du contre tasseau. De tels systèmes présentent un certain nombre d'inconvénients. En effet, la force de serrage générée est forcément limitée compte tenu des dimensions en générale très réduites de ces systèmes. En outre, l'application à ces pièces d'une force de serrage axiale suffisante, risque de provoquer des déformations dans ces systèmes et plus particulièrement sur des éléments générant le déplacement des tasseaux.

En outre, lorsque certaines pièces doivent être usinées en bout, il n'est plus possible d'effectuer un serrage latéral. On effectue alors un serrage intérieur, en agissant au niveau d'un trou ménagé dans la pièce. On peut ainsi percer un canal circulaire traversant la pièce, à l'intérieur duquel agit le système de serrage. Or, lorsqu'une grande précision est requise au niveau du taillage d'une denture, un défaut dans la précision du canal circulaire, notamment un mal rond, peut rendre très délicat le respect des tolérances prescrites au niveau de la denture. En outre, les systèmes de serrage par l'intérieur, mettent en oeuvre des pinces dont les mors s'écartent pour effectuer le serrage interne. Il est difficile ou coûteux de miniaturiser ce genre de système pour serrer des pièces de petites tailles, tout en obtenant une force de serrage satisfaisante.

### Divulgation de l'invention

L'objet de la présente invention vise à fournir un nouveau système de serrage de pièces, s'affranchissant des inconvénients précités et générant une force de serrage importante.

Un autre objet de la présente invention vise à fournir un nouveau système de serrage de pièces, permettant d'assurer le centrage desdites pièces sur leur support.

L'objet assigné à la présente invention est atteint à l'aide d'un système de serrage pour l'immobilisation d'une pièce creuse à des fins d'usinage et/ou de taillage, comprenant un premier tasseau pourvu d'un élément support s'étendant selon un axe longitudinal et sur lequel est engagée ladite pièce, un second tasseau dont au moins un organe de contact est déplaçable par rapport au premier tasseau de manière à maintenir ladite pièce, au moins un moyen d'actionnement pour générer un mouvement de déplacement axial dudit organe de contact, caractérisé en ce que le moyen d'actionnement comprend d'une part des moyens pour générer un mouvement de rotation relatif entre le premier tasseau et le second tasseau et d'autre part des moyens de transformation cinématique pour transformer le mouvement de rotation relatif en mouvement de translation axial de l'organe de contact.

Selon un exemple de réalisation du système de serrage conforme à l'invention, l'un au moins du premier tasseau et du second tasseau, est monté sur une broche rotative pour l'entraîner en rotation.

Selon un exemple de réalisation du système de serrage conforme à l'invention, l'organe de contact est un organe d'appui pour enserrer la pièce entre ledit premier tasseau et ledit organe d'appui.

Selon un exemple de réalisation du système de serrage conforme à l'invention, le premier tasseau et l'organe d'appui présentent respectivement une face d'appui annulaire en regard l'une de l'autre pour pouvoir enserrer la pièce.

Selon un exemple de réalisation du système de serrage conforme à l'invention, les moyens de transformation cinématique comprennent une portion d'extrémité de l'élément support pourvue d'un filetage, un écrou présentant un taraudage dans lequel le filetage peut s'engager par vissage, ledit écrou étant libre en translation axiale par rapport au second tasseau et l'organe d'appui sous forme d'un cylindre de guidage, fixé rigidement sur la périphérie de l'écrou avec sa première portion d'extrémité et monté coulissant sur le second tasseau avec sa seconde portion d'extrémité.

Selon un exemple de réalisation du système de serrage conforme à l'invention, l'écrou est entraîné en rotation par le second tasseau au moyen d'une coopération par complémentarité de formes, le premier tasseau et l'élément support restant fixes en rotation.

Selon un autre exemple de réalisation du système de serrage conforme à l'invention, l'élément support est entraîné en rotation par le premier tasseau, le second tasseau et l'écrou restant fixes en rotation.

Selon un autre exemple de réalisation conforme à l'invention, les premier et second tasseaux peuvent aussi être animés de mouvements en rotation opposés, lors du serrage/desserrage de la pièce.

Selon un exemple de réalisation, le système de serrage conforme à l'invention comporte un moyen de centrage pour ajuster le centrage de la pièce par rapport à l'élément support, lors de l'opération de serrage de ladite pièce.

Selon un exemple de réalisation du système de serrage conforme à l'invention, le moyen de centrage comporte au moins une douille déformable montée sur l'élément support et dont le diamètre extérieur est choisi pour permettre son insertion axiale dans la pièce, ladite douille étant enserrée entre une extrémité libre de l'écrou et un épaulement de l'élément support de manière à se déformer radialement lors du déplacement de l'écrou en direction dudit épaulement concomitamment au serrage de la pièce.

Le moyen de centrage contribue aussi, au moins en partie au maintien de la pièce.

Selon un autre exemple de réalisation conforme à l'invention, les moyens de transformation cinématique comprennent une portion d'extrémité de l'élément support pourvue d'un filetage et un écrou constituant l'organe de contact et présentant un taraudage dans lequel le filetage peut s'engager par vissage, ledit écrou étant libre en translation axiale par rapport au second tasseau.

Selon cet exemple de réalisation, le système de serrage conforme à l'invention, comporte au moins une douille déformable montée sur l'élément support et dont le diamètre extérieur est choisi pour permettre son insertion axiale dans la pièce, ladite douille déformable étant enserrée entre une extrémité libre de l'écrou et un épaulement de l'élément support, de manière à se déformer radialement lors du déplacement de l'écrou en direction dudit épaulement et à maintenir et bloquer la pièce.
La douille déformable constitue alors simultanément un moyen de centrage de la pièce.

Selon un exemple de réalisation du système de serrage conforme à l'invention, la douille déformable, l'écrou et l'épaulement présentent des dimensions extérieures identiques de manière à former, avant une déformation de la douille, une juxtaposition de surfaces cylindriques destinées à s'engager axialement dans la pièce.

Selon un exemple de réalisation du système de serrage conforme à l'invention, la douille déformable est prise en sandwich entre deux rondelles d'appui identiques, et présentant le même diamètre extérieur que ladite douille déformable.

Selon un autre exemple de réalisation du système de serrage conforme à l'invention, deux douilles déformables identiques enserrent une rondelle d'appui centrale présentant le même diamètre extérieur que lesdites douilles déformables. Selon un exemple de réalisation du système de serrage conforme à l'invention, la douille déformable est métallique.

Selon un autre exemple de réalisation du système de serrage conforme à l'invention, la douille déformable est réalisée avec un matériau synthétique.

Les objets assignés à l'invention sont également atteints à l'aide d'une machine d'usinage comportant au moins un système de serrage tel que présenté ci-dessus.

Les objets assignés à l'invention sont également atteints à l'aide d'une machine de taillage comportant au moins un système de serrage tel que présenté ci-dessus.

Les objets assignés à l'invention sont également atteints à l'aide d'un centre d'usinage et/ou de taillage automatisé, par exemple à commandes numériques, comportant au moins un système de serrage tel que présenté ci-dessus.

Un avantage du système de serrage conforme à l'invention réside dans un couple de maintien de la pièce remarquable, qu'il génère et ce sans risquer une déformation de ses éléments constitutifs. A titre d'exemple, il est possible d'atteindre avec un système de serrage conforme à l'invention, un couple de maintien de l'ordre de 1 Nm, alors qu'un système de serrage classique, de dimensions comparables, ne développe qu'un couple de maintien de l'ordre de 0,4 Nm. La force ainsi appliquée produit en effet un couple de frottement qui s'oppose à la rotation de la pièce, liée aux efforts d'usinage.

Le système conforme à l'invention permet de transformer un mouvement de rotation d'au moins un tasseau mobile en un mouvement se serrage axiale des pièces. La force de serrage (couple de maintien) remarquable ainsi obtenue résulte du couple mécanique appliqué au tasseau mobile. Les forces appliquées forment un champ de force fermé, aucune contrainte de serrage ne s'exerçant sur les structures supportant respectivement le premier tasseau et le second tasseau. Les forces de serrage par vissage sont reprises dans le premier tasseau d'une part par l'épaulement et d'autre part par le filetage de l'élément support. Les éléments constitutifs du système de serrage et plus particulièrement les éléments générant la force de serrage, sont par conséquent mécaniquement moins sollicités dans une direction axiale.

L'immobilisation de la pièce est ainsi obtenue par la force de vissage générée par le couple des broches sur lesquelles sont montés les tasseaux.

Un autre avantage du système de serrage conforme à l'invention réside dans la possibilité de l'adapter très facilement à des pièces de diamètre différent. Il suffit de remplacer l'élément support et l'écrou.

Un autre avantage su système de serrage conforme à l'invention réside dans le recentrage des pièces sur l'élément support lors du serrage. Les moyens de centrage du système de serrage permettent effectivement de pallier toute fluctuation dimensionnelle des pièces et plus précisément de leur diamètre interne. Le système de serrage conforme à l'invention permet ainsi d'éviter que les tolérances de fabrication des pièces altèrent le centrage desdites pièces et dégradent la précision de taillage ou d'usinage desdites pièces. En outre, un tel centrage effectué au niveau de l'axe central de la pièce, permet de s'affranchir des éventuels défauts de planéité d'une face externe ou des faces externes de la pièce.

### Brève description des dessins

D'autres caractéristiques et avantages de la présente invention apparaîtront plus clairement à la lecture de la description qui va suivre, faite en référence au dessin annexé, donné à titre d'exemple non limitatif, lequel représente avec :
- la figure 1, une vue partiellement en coupe d'un exemple de réalisation d'un système de serrage conforme à l'invention,
- et la figure 2, une vue partiellement en coupe du système de serrage conforme à l'invention de la figure 1, sur lequel est montée une pièce à usiner et/ou à tailler.

### Mode(s) de réalisation de l'invention

Les éléments structurellement et fonctionnellement identiques et présents sur plusieurs figures distinctes, sont affectés d'une même référence numérique ou alphanumérique.

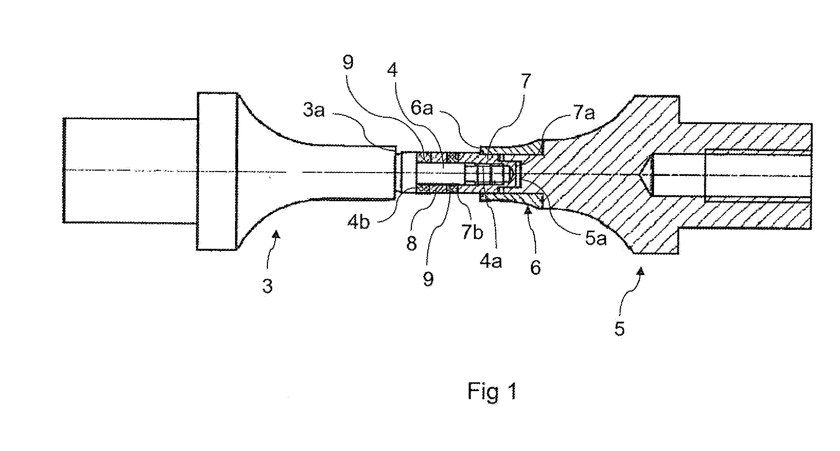

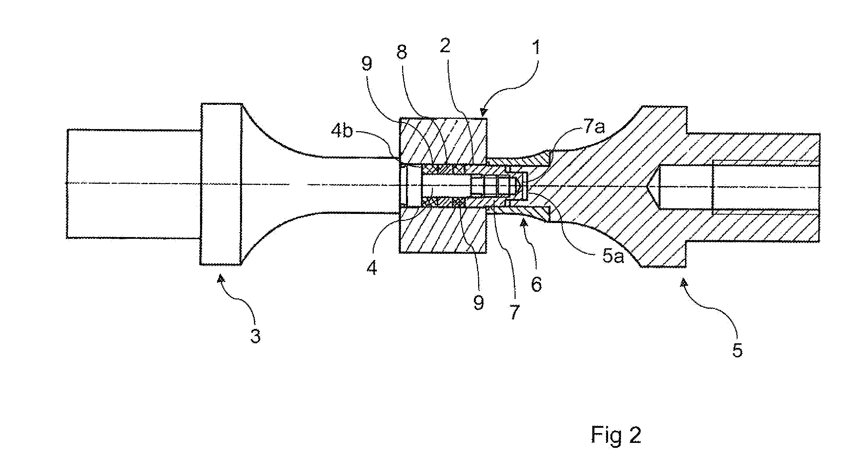

Le système de serrage conforme à l'invention et représenté aux figures 1 et 2, permet d'immobiliser une pièce 1 creuse à des fins d'usinage et/ou de taillage.

Par pièce 1 creuse, il convient d'entendre généralement une pièce 1 de forme cylindrique présentant un perçage central 2, utilisée en tant que pièce brute industrielle, au cours de la fabrication de roues simples ou de roues dentées. Ces roues sont utilisées par exemple dans la mécanique de précision et notamment dans l'horlogerie. La pièce 1 est plus généralement utilisée en micromécanique, par exemple pour réaliser un micro-réducteur.

Le système de serrage comprend un premier tasseau 3 pourvu d'un élément support 4 s'étendant selon un axe longitudinal L. La pièce 1 est montée sur l'élément support 4 par l'intermédiaire du perçage central 2.

Le système de serrage comprend également un second tasseau 5 dont au moins un organe d'appui 6 est déplaçable par rapport au premier tasseau 3 de manière à enserrer ladite pièce 1 entre ledit premier tasseau 3 et l'organe d'appui 6.

L'organe d'appui 6 est par exemple constitué d'un cylindrique chassé sur l'extrémité libre du second tasseau 5.

Le premier tasseau 3 et l'organe d'appui 6 présentent respectivement une face d'appui annulaire 3a et 6a en regard l'une de l'autre, pour pouvoir enserrer la pièce 1.

Le système de serrage comprend également au moins un moyen d'actionnement pour générer un mouvement de déplacement axial dudit organe d'appui 6. Ce moyen d'actionnement comprend d'une part des moyens pour impartir un mouvement de rotation au second tasseau 5 et d'autre part des moyens de transformation cinématique pour transformer le mouvement de rotation dudit second tasseau 5 en mouvement de translation axial de l'organe d'appui 6.

Le second tasseau 5, représenté en coupe longitudinale, est monté sur une broche rotative, non représentée, permettant de l'entraîner en rotation. Le montage des tasseaux 3 et 5 sur des broches synchronisées permet une rotation combinée ou non, respectivement pour faire pivoter la pièce ou pour obtenir un serrage ou un desserrage de la pièce.

Les moyens de transformation cinématique comprennent une portion d'extrémité de l'élément support 4 pourvue d'un filetage 4a, un écrou 7 présentant un taraudage 7a dans lequel le filetage 4a peut s'engager par vissage. L'écrou 7 est d'une part solidaire en rotation et d'autre part libre en translation axiale par rapport au second tasseau 5.

L'organe d'appui 6 sous forme d'un cylindre de guidage, est fixé rigidement sur la périphérie de l'écrou 7 avec sa première portion d'extrémité. L'organe d'appui 6 est aussi monté coulissant sur le second tasseau 5 avec sa seconde portion d'extrémité.

L'écrou 7 est entraîné en rotation par le second tasseau 5 au moyen d'une coopération par complémentarité de formes. L'écrou 7 présente à cet effet une tête 7a de section non circulaire, par exemple carrée ou hexagonale, ajustée de manière coulissante dans un logement 5a de forme complémentaire, ménagé dans l'extrémité du second tasseau 5.

Selon un exemple de réalisation, le système de serrage conforme à l'invention comporte un moyen de centrage pour ajuster et assurer le centrage de la pièce 1 par rapport à l'élément support 4, lors de l'opération de serrage de ladite pièce 1.

Le moyen de centrage comporte à cet effet au moins une douille déformable 8 montée sur l'élément support 4 et dont le diamètre extérieur est choisi pour permettre son insertion axiale dans la pièce 1.

La douille déformable 8 est enserrée entre une extrémité libre 7b de l'écrou 7 et un épaulement 4b de l'élément support 4, de manière à se déformer radialement, par compression axiale, lors du déplacement de l'écrou 7 en direction dudit épaulement 4b, concomitamment au serrage de la pièce 1.

La douille déformable 8, l'écrou 7 et l'épaulement 4b présentent avantageusement des dimensions extérieures identiques de manière à former, avant une déformation de ladite douille déformable 8, une juxtaposition de surfaces cylindriques destinées à s'engager axialement dans le perçage de la pièce 1.

Selon un exemple de réalisation du système de serrage conforme à l'invention, la douille déformable 8 est prise en sandwich entre deux rondelles d'appui 9 identiques, et présentant le même diamètre extérieur que ladite douille déformable 8. Les rondelles d'appui 9 permettent d'exercer une pression uniforme et de transmettre une force à la douille déformable 8. L'utilisation des rondelles d'appui 9 permet également d'utiliser une douille déformable 8 plus courte, augmentant ainsi la précision de sa déformation.

Les rondelles d'appui 9 permettent d'optimiser le positionnement de la douille déformable 8. Pour une pièce 1 allongée, on utilise par exemple une douille déformable 8 à chacune de ses extrémités pour équilibrer le recentrage de ladite pièce 1.

Selon un autre exemple de réalisation du système de serrage conforme à l'invention, deux douilles déformables 8 identiques enserrent une rondelle d'appui 9 centrale, présentant le même diamètre extérieur que lesdites douilles déformables 8.

La douille déformable 8 doit être moins rigide que la rondelle d'appui 9.

Selon un exemple de réalisation du système de serrage conforme à l'invention, la douille déformable 8 est métallique. La douille déformable 8 est par exemple réalisée en laiton et la rondelle d'appui 9 est par exemple réalisée en acier.

Selon un autre exemple de réalisation du système de serrage conforme à l'invention, la douille déformable 8 est réalisée dans un matériau synthétique du genre PEEK ou POM.

L'exemple de réalisation du système de serrage conforme à l'invention illustré aux figures fonctionne de la façon explicitée ci-après.

Lorsque la pièce 1 est montée sur l'élément support 4 comportant les rondelles 9 et la douille déformable 8, le second tasseau 5 se rapproche du premier tasseau 3 et ce jusqu'à un contact entre le filetage 4a de l'élément support 4 et le taraudage 7a de l'écrou 7. L'ensemble de ces éléments sont bien entendu centrés par rapport à un axe longitudinal L.

Le second tasseau 5 est alors mis en rotation pour initier le vissage du filetage 4a dans le taraudage 7a. Ce vissage entraîne en translation l'écrou 7 et de l'organe d'appui 6 en direction du premier tasseau 3.

L'écrou 7 entraîne l'organe d'appui 6, générant ainsi le serrage de la pièce 1 entre les faces annulaires 3a et 6a, c'est-à-dire l'immobilisation de ladite pièce 1.

Concomitamment à cette translation axiale de l'écrou 7, l'extrémité libre 7b dudit écrou 7 vient comprimer les rondelles 9 et la douille déformable 8 contre l'épaulement 4b de l'élément support 4. La déformation radiale de la douille déformable 8 recentre alors, si nécessaire, la pièce 1 par rapport à l'élément support 4, en absorbant d'éventuelles tolérances dimensionnelles de ladite pièce 1.

Selon un autre exemple de réalisation du système de serrage conforme à l'invention, non représenté aux figures, le second tasseau 5 comporte au moins un organe de contact déplaçable par rapport au premier tasseau 3, de manière à maintenir la pièce 1 et au moins un moyen d'actionnement pour générer un mouvement de déplacement axial dudit organe de contact.

Selon cet exemple de réalisation, le moyen d'actionnement comprend d'une part des moyens pour générer un mouvement de rotation relatif entre le premier tasseau 3 et le second tasseau 5 et d'autre part des moyens de transformation cinématique pour transformer le mouvement de rotation relatif, en mouvement de translation axiale de l'organe de contact.

Les moyens de transformation cinématique comprennent alors une portion d'extrémité de l'élément support 4 pourvue du filetage 4a et l'écrou 7 constituant l'organe de contact et présentant le taraudage 7a dans lequel le filetage 4a peut s'engager par vissage, ledit écrou 7 étant libre en translation axiale par rapport au second tasseau 5.

Le système serrage comporte par ailleurs au moins une douille déformable 8 montée sur l'élément support 4 et dont le diamètre extérieur est choisi pour permettre son insertion axiale dans la pièce 1. La douille déformable 8 est enserrée entre l'extrémité libre 7b de l'écrou 7 et un l'épaulement 4b de l'élément support 4, de manière à se déformer radialement lors du déplacement de l'écrou 7 en direction dudit épaulement 4b et à maintenir et bloquer ainsi la pièce 1. La douille 8 constitue alors simultanément un moyen de maintien et un moyen de centrage pour la pièce 1.

Il est évident que la présente description ne se limite pas aux exemples explicitement décrits, mais comprend également d'autres modes de réalisation et/ou de mise en oeuvre. Ainsi, une caractéristique technique décrite ou une étape de mise en oeuvre décrite peut être remplacée respectivement par une caractéristique technique équivalente ou une étape équivalente, sans sortir du cadre de la présente invention.

## Revendications

1. Système de serrage pour l'immobilisation d'une pièce (1) creuse à des fins d'usinage et/ou de taillage, comprenant un premier tasseau (3) pourvu d'un élément support (4) s'étendant selon un axe longitudinal (L) et sur lequel est engagée ladite pièce (1), un second tasseau (5) dont au moins un organe de contact est déplaçable par rapport au premier tasseau (3) de manière à maintenir ladite pièce (1), au moins un moyen d'actionnement pour générer un mouvement de déplacement axial dudit organe de contact,
**caractérisé en ce que** le moyen d'actionnement comprend d'une part des moyens pour générer un mouvement de rotation relatif entre le premier tasseau (3) et le second tasseau (5) et d'autre part des moyens de transformation cinématique pour transformer le mouvement de rotation relatif, en mouvement de translation axiale de l'organe de contact.

2. Système de serrage selon la revendication 1, **caractérisé en ce que** l'un au moins du premier tasseau (3) et du second tasseau (5), est monté sur une broche rotative pour l'entraîner en rotation.

3. Système de serrage selon la revendication 1 ou 2, **caractérisé en ce que** l'organe de contact est un organe d'appui (6) pour enserrer la pièce (1) entre ledit premier tasseau (3) et ledit organe d'appui (6).

4. Système de serrage selon la revendication 3, **caractérisé en ce que** le premier tasseau (3) et l'organe d'appui (6) présentent respectivement une face d'appui annulaire (3a, 6a) en regard l'une de l'autre pour pouvoir enserrer la pièce (1).

5. Système de serrage selon l'une quelconque des revendications 1 à 4, **caractérisé en ce que** les moyens de transformation cinématique comprennent :
- une portion d'extrémité de l'élément support (4) pourvue d'un filetage (4a),
- un écrou (7) présentant un taraudage (7a) dans lequel le filetage (4a) peut s'engager par vissage, ledit écrou (7) étant libre en translation axiale par rapport au second tasseau (5),
- et l'organe d'appui (6) sous forme d'un cylindre de guidage fixé rigidement sur la périphérie de l'écrou (7) avec sa première portion d'extrémité et monté coulissant sur le second tasseau (5) avec sa seconde portion d'extrémité.

6. Système de serrage selon la revendication 5, **caractérisé en ce que** l'écrou (7) est entraîné en rotation par le second tasseau (5) au moyen d'une coopération par complémentarité de formes, le premier tasseau (3) et l'élément support (4) restant fixes en rotation.

7. Système de serrage selon la revendication 5 ou 6, **caractérisé en ce que** l'élément support (4) est entraîné en rotation par le premier tasseau (3), le second tasseau (5) et l'écrou (7) restant fixes en rotation.

8. Système de serrage selon l'une quelconque des revendications 1 à 7, **caractérisé en ce qu'**il comporte un moyen de centrage pour ajuster le centrage de la pièce par rapport à l'élément support (4), lors de l'opération de serrage de ladite pièce (1).

9. Système de serrage selon la revendication 8, **caractérisé en ce que** le moyen de centrage comporte au moins une douille déformable (8) montée sur l'élément support (4) et dont le diamètre extérieur est choisi pour permettre son insertion axiale dans la pièce (1), ladite douille déformable (8) étant enserrée entre une extrémité libre (7b) de l'écrou (7) et un épaulement (4b) de l'élément support (4), de manière à se déformer radialement lors du déplacement de l'écrou (7) en direction dudit épaulement (4b) concomitamment au serrage de la pièce (1).

10. Système de serrage selon la revendication 8, **caractérisé en ce que** la douille déformable (8), l'écrou (7) et l'épaulement (4b) présentent des dimensions extérieures identiques de manière à former, avant une déformation de la douille déformable (8), une juxtaposition de surfaces cylindriques destinées à s'engager axialement dans la pièce (1).

11. Système de serrage selon la revendication 1 ou 2, **caractérisé en ce que** les moyens de transformation cinématique comprennent :
- une portion d'extrémité de l'élément support (4) pourvue d'un filetage (4a),
- et un écrou (7) constituant l'organe de contact et présentant un taraudage (7a) dans lequel le filetage (4a) peut s'engager par vissage, ledit écrou (7) étant libre en translation axiale par rapport au second tasseau (5).

12. Système de serrage selon la revendication 11, **caractérisé en ce qu'**il comporte au moins une douille déformable (8) montée sur l'élément support (4) et dont le diamètre extérieur est choisi pour permettre son insertion axiale dans la pièce (1), ladite douille déformable (8) étant enserrée entre une extrémité libre (7b) de l'écrou (7) et un épaulement (4b) de l'élément support (4), de manière à se déformer radialement lors du déplacement de l'écrou (7) en direction dudit épaulement (4b) et à maintenir et bloquer la pièce (1).

13. Système de serrage selon l'une quelconque des revendications 8 à 12, **caractérisé en ce que** la douille déformable (8) est prise en sandwich entre deux rondelles d'appui (9) identiques, présentant le même diamètre extérieur que ladite douille déformable (8).

14. Système de serrage selon l'une quelconque des revendications 8 à 12, **caractérisé en ce que** deux douilles déformables (8) identiques enserrent une rondelle d'appui (9) centrale présentant le même diamètre extérieur que lesdites douilles déformables (8).

15. Système de serrage selon l'une quelconque des revendications 8 à 14, **caractérisé en ce que** la douille déformable (8) est métallique.

16. Système de serrage selon l'une quelconque des revendications 8 à 14, **caractérisé en ce que** la douille déformable (8) est réalisée dans un matériau synthétique.

17. Machine d'usinage comportant au moins un système de serrage conforme à l'une quelconque des revendications 1 à 16.

18. Machine de taillage comportant au moins un système de serrage conforme à l'une quelconque des revendications 1 à 16.

19. Centre d'usinage et/ou de taillage automatisé comportant au moins un système de serrage conforme à l'une quelconque des revendications 1 à 16.
